Europäisches Patentamt

(19) European Patent Office

Office européen des brevets

(11) Publication number: **0 001 923**
**B1**

## (12) EUROPEAN PATENT SPECIFICATION

(45) Date of publication of patent specification: **18.11.81**

(51) Int. Cl.³: **B 23 B 51/00**

(21) Application number: **78300586.1**

(22) Date of filing: **02.11.78**

(54) An improved drilling bit.

<table>
<tr><td>

(30) Priority: **02.11.77 AU 2275/77**

(43) Date of publication of application:
**16.05.79 Bulletin 79/10**

(45) Publication of the grant of the European patent:
**18.11.81 Bulletin 81/46**

(84) Designated Contracting States:
**DE FR GB NL SE**

(56) References cited:
**DE - A - 2 751 255**
**US - A - 3 203 493**

**WERKSTATT UND BETRIEB vol. 110,**
**September 1977, München**
**K. FABER "Kurzbohrer mit Hartmetall-**
**Wendelplatten" pages 615 to 618.**

</td><td>

(73) Proprietor: **Hillier, Raymond Garnet**
**159 Boniface Street**
**Coopers Plains, 4108 Queensland (AU)**
(73) Proprietor: **Hillier, Elisabeth Jean**
**159 Boniface Street**
**Coopers Plains 4108, Queensland (AU)**

(72) Inventor: **Hillier, Raymond Garnet**
**159 Boniface Street**
**Coopers Plains 4108, Queensland (AU)**

(74) Representative: **Connor, Terence Kevin et al,**
**FITZPATRICKS Kern House 61/62 Lincoln's Inn**
**Fields**
**London WC2B 6EX (GB)**

</td></tr>
</table>

Courier Press, Leamington Spa, England.

An improved drilling bit

The invention relates to drilling bits, particularly but not exclusively for drilling bits for use in drilling metal.

Drilling bits for use in drilling metal have been known for some time and they generally suffer from the severe drawback of being quickly worn in use requiring that their cutting edges be re-cut of sharpened. Proposals have been made to provide such drills with replaceable cutting inserts but problems have been found in adequately securing the inserts in the bit, accurately locating the or each insert used on the drill bit to achieve an even distribution of loadings on the bit in use and, again, in distributing the cutting inserts across the drill bit such that a substantially flat bottomed hole is produced.

U.S.—A—No. 3203493 describes an arrangement in which a removable cutting insert is mounted in a drill bit in a way which allows its position to be varied such that the effective diameter of the drill is variable between limits. To provide this this specification describes an arrangement in which an elongated cutting insert is slotted into an aperture in the drill bit with one end of the insert exposed for cutting operation. The particular arrangement described in the specification provides that the cutting element, at its operative cutting edge, is inclined to the plane including the drill bit axis.

The article "Kurzbohrer mit Hartmetall-Wendeplatten an Stelle HSS-Spiralbohrer" (Faber: Werkstatt und Betrieb 110 (1977) 9) discusses, among other things, a metal drill bit having a pair of circular inserts which are rotatable to present ones of a number of different cutting edges, which inserts are located on opposite sides of the bit axis and are so disposed as to balance the forces acting, in use, on the drill bit.

Such an arrangement reduces the difficulties found with the known drill bits for example in more nearly balancing the loadings produced in use by the two inserts but does not completely alleviate those problems.

Objects of the present invention include the provision of a drill bit in which worn cutting edge portions may quickly and readily be replaced, and of a design of drilling bit which is capable of drilling substantially flat bottomed holes.

In accordance with the invention there is provided a drilling bit comprising a plurality of cutters each having a projecting cutting edge extending substantially radially of the bit axis; said bit including an outer head on which said cutters are mounted and a shank portion formed with two opposed longitudinal flutes, adjacent the outer ends of which flutes the cutters are mounted; wherein each cutter is substantially frusto-conical and each cutting edge comprises a segmental part of a substantially circular leading face of a cutter; wherein the axes of the cutters are at differing distances from the bit axis and are substantially tangential to circles centred on the bit axis, and each cutter is rotatable about its axis to expose a fresh cutting segment, means being provided for releasably locking each of the cutters against rotation about its axis; wherein the cutters are arranged such that the extremities of their cutting edges are substantially in a plane perpendicular to the bit axis, and one of the cutting edges intersects, near to one side thereof, the bit axis, the leading face of this cutter lying in a plane including the bit axis and wherein two cutters are mounted in the leading edge of one flute and one cutter of larger diameter than the diameter of the other two cutters is mounted in the leading edge of the other flute, the spacing of said one cutter from the bit axis being approximately mid-way between the spacing of the axes of the other two cutters from the bit axis, and wherein the leading faces of those cutters whose cutting edges do not intersect the bit axis, lie in planes inclined to the bit axis.

Other features of the invention will become apparent from the following description.

In order that a preferred embodiment of the invention may be readily understood and carried into practical effect, reference is now made to the accompanying drawings, wherein:—

FIG. 1 is a side elevational view of a drilling bit according to the invention.

FIG. 2 is a plan view of the bit,

FIG. 3 is a side elevational view of the bit from the direction diametrically opposite to that of FIG. 1, and

FIG. 4 is a sectional view, to larger scale, of a hole drilled with the bit shown in FIGS. 1, 2 and 3.

The shank 10 of the drilling bit is made with a larger diameter part 11 for engagement by a drilling machine, and a coaxial reduced or clearance diameter part 12, terminating in a coaxial head 13 of increased diameter. The head 13 and the shank part 12 are formed with two opposed longitudinal flutes 14 and 15 leading to run-outs at 16.

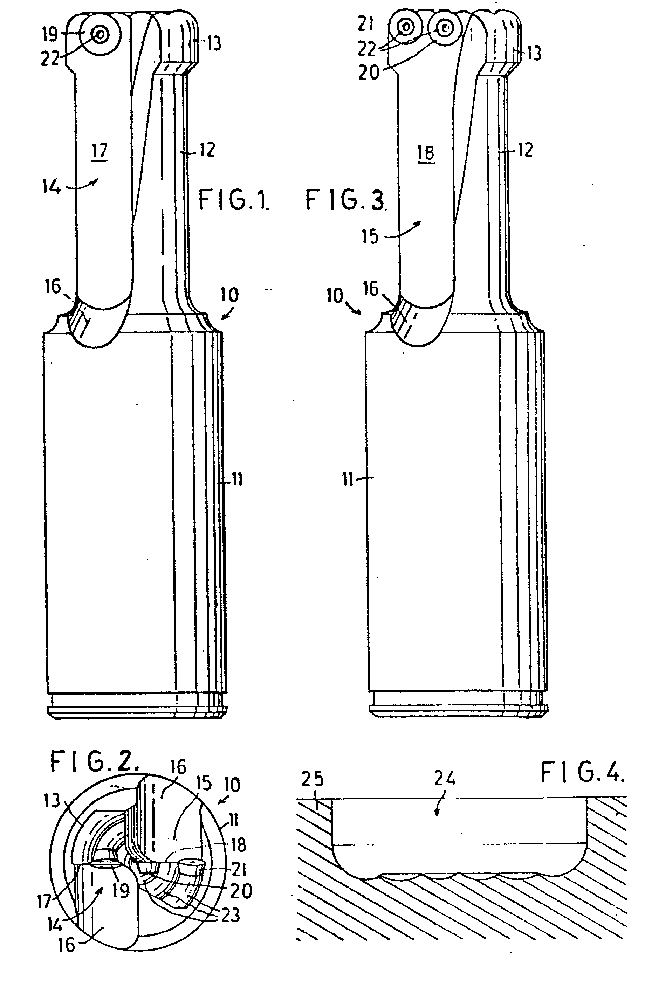

Each of the flutes is principally defined by two faces substantially perpendicular to each other and in planes radial to the axis of the bit. At the head of the bit, the leading face 17 of the flute 14, and the leading face 18 of the flute 15, are formed with substantially frusto-conical recesses to receive closely a series of rotatable tungsten carbide cutters, a single cutter 19 being set into the flute leading face 17, and two cutters 20 and 21 being set into the flute leading face 18, each of the cutters being axially apertured and rotatably engaged on a pivot screw 22 threadedly engaged in the bit head and tightened to lock the cutter releasably in place. The cutters 19, 20 and 21 are arranged with the transverse diameters of their leading faces, which are at the larger-diameter end of the cutters, on a line which is diametral with respect to the bit head 13. As indicated in FIG. 2, the leading face of the cutter 20 is in a plane passing through the axis of the bit, but the other cutters 19 and 21 are somewhat raked or inclined to this plane. Each of the cutters 19, 20 and 21 has segmental part or cutting edge extending from the extremity of the bit head, the cutter 21 being also at one side of the bit head, the cutter 20 extending, in the direction away from cutter 21, somewhat beyond the axis of the bit. The axis of the cutter 19, which is of somewhat larger diameter than the similar cutters 20 and 21, is spaced from the axis of the bit by a distance mid-way between the distances of the axes of the cutters 20 and 21 from the bit axis. The projecting segmental parts or cutting edges of the cutters are backed by concentric arcuate projections 23 from the end of the bit head 13.

In use, when the bit is rotated and brought to a work piece, or the bit is held stationary and a work piece is rotated and brought to it, on a lathe, for example, the three cutters 19, 20 and 21 are brought at the same time onto the work piece and cut into it to form, initially, three concentric shallow grooves which are quickly merged so that, as shown in FIG. 4, the hole 24 formed in the work piece 25 is nearly flat bottomed. To form a hole of a certain diameter to a predetermined depth, then, requires the cutting of less metal than is the case when a conventional bit is used, forming a hole with a coned bottom. As the exposed cutting segment of the innermost cutter 20 extends slightly beyond the axis of the bit, no central nib of metal is left when the hole is drilled.

Tests have shown that bits according to the invention may be used to drill a larger number of holes in very hard metal with far less wear than is usual in conventional bits, and the bits according to the invention have been found to be of very high efficiency, and capable of being operated at speeds and pressures not practical with conventional bits.

When the cutters become worn, each may be quickly and easily turned to expose a fresh and unworn cutting segment, and when the cutters finally become unserviceable, they may be very easily and conveniently replaced.

Drilling bits according to the invention will be found to be very effective in achieving the objects for which they have been devised. It will, of course, be understood that the particular embodiment of the invention herein described and illustrated by way of example only may be subject to many modifications of constructional detail and design, which will be readily apparent to persons skilled in the art, without departing from the scope and ambit of the invention hereinafter claimed.

## Claims

1. A drilling bit comprising a plurality of cutters (19, 20, 21) each having a projecting cutting edge extending substantially radially of the bit axis; said bit including an outer head (13) on which said cutters are mounted and shank portion (12) formed with two opposed longitudinal flutes (14,15), adjacent the outer ends of which flutes the cutters (19, 20, 21) are mounted; wherein each cutter is substantially frusto-conical and each cutting edge comprises a segmental part of a substantially circular leading face of a cutter; wherein the axes of the cutters are at differing distances from the bit axis and are substantially tangential to circles centred on the axis of the bit, and each cutter is rotatable about its axis to expose a fresh cutting segment, means (22) being provided for releasably locking of the cutters against rotation about its axis; wherein the cutters (19, 20, 21) are arranged such that the extremities of their cutting edges are substantially in a plane perpendicular to the bit axis, and one of the cutting edges intersects, near to one side thereof, the bit axis, the leading face of this cutter (20) lying in a plane including said bit axis characterised in that two cutters (20, 21) are mounted in the leading edge of one flute and one cutter (19), of larger diameter than the diameter of the other two cutters, is mounted in the leading edge of the other flute, the spacing of said one cutter (19) from the bit axis being approximately midway between the spacing of the axes of the other two cutters from the bit axis; and in that the leading faces of those cutters whose cutting edges do not intersect the bit axis, lie in planes inclined to the bit axis.

2. A bit as claimed in claim 1, characterised in that the faces on said flutes (14,15) formed in said shank portion (12) are perpendicular to one another and lie in planes extending generally radially of the bit axis, and wherein the cutting edges lie in a single plane including the bit axis.

3. A bit as claimed in claim 1 or claim 2, characterised in that arcuate projections (23) are formed on the end of the drilling bit generally concentric of the bit axis, which projections back the projecting segmental cutting edges of the cutters (19, 20, 21).

## Revendications

1. Un foret comportant une série de taillants (19, 20, 21) ayant chacun une aréte coupante saillante s'étendant approximativement radialement par rapport à l'axe du foret; ledit foret comportant une tête extérieure (13) sur laquelle lesdits taillants sone montés et une partie de queue (12) sur laquelle sont formées deux cannelures longitudinales opposées (14, 15), les taillants (19, 20, 21) étant montés adjacents aux extrémités extérieures de ces cannelures; dans lequel chaque taillant est approximativement tronconique et chaque arête coupante est constituée par une partie segmentaire d'une face d'attaque approximativement circulaire d'un taillant; dans lequel les axes des taillants sont situés à des distances différentes de l'axe du foret et sont approximativement tangents à des cercles centrés sur l'axe du foret, et chaque taillant peut être déplacé en rotation autour de son axe pour exposer un nouveau segment de coupe, des moyens (22) étant prévus pour immobiliser de manière déblocable chacun des taillants à l'encontre d'une rotation autour de son axe; dans lequel les taillants (19, 20, 21) sont disposés des telle sorte que les extrémités de leurs arêtes coupantes sont situées approximativement dans un plan perpendiculaire à l'axe du foret, et que l'une des arêtes coupantes intersecte, au voisinage, d'un de ses côtés, l'axe du foret, la face d'attaque de ce taillant (20) étant située dans un plan qui contient ledit axe du foret caractérisé en ce que deux taillants (20, 21) sont montés dans le bord d'attaque d'une cannelure et un unique taillant (19) ayant un diamètre supérieur au diamètre des deux autres taillants est monté dans le bord d'attaque de l'autre cannelure, l'espacement dudit taillant unique (19) de l'axe du foret étant approximativement intermédiaire entre les espacements des axes des deux autres taillants de l'axe du foret; et en ce que les faces d'attaque de ceux des taillants dont les arêtes coupantes n'intersectent pas l'axe du foret s'étendent dans des plans inclinés sur l'axe du foret.

2. Un foret tel que revendiqué dans la revendication 1, caractérisé en ce que les faces desdites cannelures (14, 15) formées dans ladite partie de queue (12) sont perpendiculaires l'une à l'autre et sont situées dans des plans qui s'étendent approximativement radialement par rapport à l'axe du foret, et dans lequel les arêtes coupantes sont situées dan un unique plan qui contient l'axe du foret.

3. Un foret tel revendiqué dans la revendication 1, ou dans la revendication 2, caractérisé en ce que des protubérances arquées sont formées sur l'extrémité du foret approximativement concentriques avec l'axe du foret, protubérances que épaulent les arêtes coupantes segmentaires des taillants (19, 20, 21).

**Patentansprüche**

1. Bohrer mit einer Mehrzahl von Schneidelementen (19, 20 und 21), die jeweils einen im wesentlichen sich radial zur Bohrerachse erstreckenden hervorstehenden Schneidrand aufweisen, wobie der Bohrer einen äußeren Kopf (13) Aufweist, auf dem zwei Schneidelemente montiert und ein Schaftteil (12) mit zwei gegenüberliegenden longitudinalen Auskehlungen (12, 15) geformt ist und neben den äußeren Enden der Auskehlungen die Schneidelemente (19, 20, 21) montiert sind, wobei jedes Schneidelement im wesentlichen kegell-stumpfförming ausgebildet ist und jede Schneidkante einen segmentförmigen Teil einer im wesentlichen kreisförmigen Frontfläche eines Schneidelementes umfaßt, und die Achsen der Schneidelemente sich in unterschiedlichen Abständen von der Bohrerachse und im wesentlichen tangential zu zu der Bohrerachse zentrierten Kreisen erstrecken und jedes Schneidelement zum Freilegen eines frischen Schneidsegments um seine Achse drehbar ausgebildet ist, und mit einem Element (22) zum lösbaren Verriegeln jedes der Schneidelemente gegen Drehung un seine Achse, wobei die Schneidelemente (19, 20, 21) so angeordnet sind, daß die äußersten Teile ihrer Schneidkanten sich im wesentlichen in einer Ebene senkrecht zu der Bohrerachse erstrecken und eine der Schneidkanten nahe bei einer Seite derselben die Bohrerachse schneidet und die Vorderfläche dieses Schneidelementes (20) in einer die Bohrerachse einschließenden Ebene liegt, dadurch gekennzeichnet, daß zwei Schneidelemente (20, 21) in dem vorderen Rand von Einer Auskehlung und ein Schneidelement (19) mit einem Durchmesser, der größer also derjenige der anderen beiden Schneidelemente ist, in dem worderen Rand der anderen Auskehlung montiert sind, daß der Abstand des einen Schneidelementes (19) von der Bohrerachse annähernd der Hälfte des Abstandes des Achsen der anderen beiden Schneidelemente von der Bohrerachse beträgt, und daß die Vorderflächen derjenigen Schneidelemente deren Schneidkanten die Bohrerachse nicht schneiden, in einer gegen die Bohrerachse geneigten Ebene liegen.

2. Bohrer nach Anspruch 1, dadurch gekenzeichnet, daß die Flächen der in dem Schaftteil (12) Geformten Auskehlungen (14, 15) senkrecht zueinander ausgebildet sind und im wesentlichen zur Bohrerachse radial erstreckenden Ebenen liegen und die Schneidkanten in einer einzigen, die Bohrerachse einschließenden Ebene liegen.

3. Bohrer nach Anspruch 1 oder 2, dadurch gekennzeichnet, daß gewölbte hervorstehende Teile (23) auf der Stirn des Bohrers im wesentlichen Konzentrisch zu der Bohrachse vorgesehen sind, welche hinter den hervorstehenden Schneidkantensegmenten der Schneidelemente (19, 20, 21) hervorstehen.

FIG.1.

FIG.3.

FIG.2.

FIG.4.